# EUROPEAN PATENT APPLICATION

(11) **EP 4 435 014 A1**
(43) Date of publication of application: **25.09.2024**
(21) Application number: 22894299.1
(22) Date of filing: 15.07.2022
(51) Int. Cl.: C08F 6/00, C08F 120/14, C08F 114/06, C08F 236/06, C08F 236/08, B01D 1/14

(54) **SUPERCRITICAL CARBON DIOXIDE ASSISTED PERIODIC DEVOLATILIZATION PROCESS AND DEVICE**

(30) Priority: 17.11.2021 CN 202111360803
(71) Applicant: East China University of Science and Technology, Shanghai 200237 (CN)
(72) Inventor: QIU, Xiaoyi, Shanghai 200237 (CN); XI, Zhenhao, Shanghai 200237 (CN); ZHAO, Ming, Shanghai 200237 (CN); HUANG, Jianqing, Shanghai 200237 (CN); WANG, Xuesong, Shanghai 200237 (CN); ZHANG, Lin, Shanghai 200237 (CN); LI, Xiang, Shanghai 200237 (CN)
(74) Representative: Herrero & Asociados, S.L.
(86) International application number: PCT/CN2022/105906
(87) International publication number: WO 2023/087756

(57) **Abstract**

Disclosed is a supercritical carbon dioxide assisted periodic devolatilization process. The process comprises a plurality of pressure cycle periods and uses carbon dioxide as a supercritical medium; the pressure is firstly increased and then reduced during the pressure cycle periods, so that the carbon dioxide is converted between a supercritical state and a gaseous state to realize polymer devolatilization. In order to implement devolatilization of a heat-sensitive polymer, the present invention makes use of the principles that the solubility of volatiles in supercritical CO2 is greater than the solubility thereof in the polymer and that periodic pressure is used to promote defoaming; the present invention can efficiently devolatilize at a low temperature with a short devolatilization time, can enable the discharge of materials while devolatilizing, reduces the content of volatiles in the devolatilized polymer to below 50ppm, and is highly efficient.

## Description

### TECHNICAL FIELD

The present application relates to the technical field of devolatilization of fluids, specifically to a supercritical carbon dioxide assisted periodic devolatilization process and a supercritical carbon dioxide assisted periodic devolatilization device.

### BACKGROUND

Devolatilization is a technology of removing one or more unreacted monomers or one or more unreacted solvents in a reaction from a polymer by heating and volatilization. A devolatilization process must consider that heating temperature is increased to volatilize the monomers and solvents by heating effectively, while the temperature of the polymer is increased to above a softening point of the polymer to make the polymer have fluidity, without overheating and damaging a property of the polymer, such as molecular weight, color, etc. Obviously, the devolatilization process of the polymer is essentially a controlled separation process involving polymer melting under heat, and a main key factor includes the control of pressure, temperature, and heating time.

In the related art, a latent heat dependent vacuum removal method is generally utilized by a polymer devolatilization method. The method has high energy consumption. In addition, during a later stage of devolatilization, since the viscosity of the system increases sharply, the diffusion coefficient of a volatile component drops sharply, resulting in low mass transfer efficiency of the device. Since the polymer is in a high-temperature environment for a long time, the high polymer, especially a thermosensitive polymer, is extremely prone to degrade. On the other hand, under vacuum conditions, it is difficult to discharge a devolatilized high polymer from a devolatilization container, which necessitates intermittent devolatilization in the devolatilization process, leading to repeated vacuuming and excessive energy consumption.

In the related art, in order to achieve continuous devolatilization, some processes also utilize normal pressure devolatilization, so as to realize simultaneous devolatilization and discharge, thereby shortening devolatilization time. However, on the one hand, the normal pressure devolatilization requires higher temperature. On the other hand, the devolatilization by means of the normal pressure devolatilization is not thorough, the normal pressure devolatilization may only be applied to the high polymer with a low impurity requirement, and the normal pressure devolatilization is not suitable for products that require impurity levels below a certain ppm threshold. For thermosensitive polymer, which is more sensitive to the high temperature, the temperature should not be set too high. At the same time, the devolatilization time should not be excessively long. Neither the normal pressure devolatilization nor low-pressure vacuum devolatilization may achieve the desired devolatilization effect.

Thermosensitive polymer includes a polymer containing unsaturation, such as butadiene, cyclopentadiene, etc. Carbon-carbon unsaturation may undergo polymerization during a preheating stage of the devolatilization process, leading to unnecessary branching or crosslinking in the polymer, ultimately affecting the performance of the polymer. Therefore, low-pressure and low-temperature devolatilization process is generally utilized in the related art. However, under the devolatilization condition, there may be some problems with the discharge of the devolatilized polymer. That is, it is necessary to restore the pressure inside the devolatilization tank to the normal pressure before turning on a discharge opening for discharge, otherwise it will cause the polymer to block the discharge opening and cannot be removed.

The Chinese patent publication No. CN101220109A discloses a supercritical fluid devolatilization method for polystyrene, which utilizes carbon dioxide as a supercritical medium and causes the polystyrene to be treated to be in full contact with supercritical carbon dioxide in a devolatilization device under supercritical condition, so as to remove a volatile component in the polystyrene. In the method described in CN101220109A, the carbon dioxide is introduced into the polymer to increase a contact surface of the polymer. However, in the method, it is easy to lead to the carbon dioxide to be encapsulated by the polymer, and it is difficult to form a supercritical state after the carbon dioxide is encapsulated the polymer, leading to the devolatilization failure. In addition, since the devolatilization device is in a vacuum low-pressure state, it is difficult to discharge materials simultaneously during the devolatilization process. At the same time, in practice, it was found that the method described in CN101220109A does not have a good devolatilization effect on a mixture of thermosensitive polymer containing 3000 ppm volatile compounds.

The Chinese patent publication No. CN111607022A discloses a devolatilization method for trans butadiene rubber, which utilizes the supercritical carbon dioxide to extract a volatile component from the trans butadiene rubber. In the method described in CN111607022A, a process of first increasing pressure and then decreasing pressure is utilized to extract and devolatilize under the low-temperature condition. However, a static extraction method is adopted by the method described in CN111607022A, and the supercritical carbon dioxide flows upstream through the polymer to achieve the extraction effect. Obviously, in the method described in CN111607022A, there is a same problem as the static extraction method, i.e., inability to achieve full and uniform contact, leading to achieve only partial extraction, with other parts being incompletely extracted. Additionally, the devolatilization process is time-consuming, taking 0.5 to 4 hours for a single session, and after the devolatilization process is completed, the residual volatile component is above 600 ppm, resulting in a low devolatilization efficiency.

### SUMMARY OF THE DISCLOSURE

A purpose of the present disclosure is to provide a supercritical carbon dioxide assisted periodic devolatilization process and device, so as to solve a problem that the high efficiency devolatilization of the vacuum devolatilization process in the related art cannot be balanced with the discharge by means of periodically changing the pressure, especially for a thermosensitive polymer and/or a high-viscosity polymer. In this way, it may effectively prevent the decomposition of the polymer while effectively devolatilization under the low-temperature condition, and may further have a good devolatilization effect for a polymer containing a high-volatility component. The present disclosure may achieve high devolatilization efficiency by simple and low modification on the basis of an existing devolatilization device, and has the advantages of low cost, no impact of the devolatilization process on a physical property of the polymer, etc.

In order to achieve the above-mentioned objective, the following technical solutions are adopted by some embodiments of the present disclosure.

A supercritical carbon dioxide assisted periodic devolatilization process is provided by some embodiments of the present disclosure, including: a plurality of pressure cycle periods; where carbon dioxide is used as a supercritical medium, the pressure is firstly increased and then decreased during each of the plurality of pressure cycle periods, and the carbon dioxide is converted between a supercritical state and a gaseous state to realize devolatilization of a polymer.

In some embodiments, during the each of the plurality of pressure cycle periods, the pressure in a devolatilization tank is firstly increased to P₁ in a range from 8 MPa to 12 MPa and the pressure inside the devolatilization tank is then decreased to P₂ in a range from 0.5 KPa to 1 KPa.

In some embodiments, during the each of the plurality of pressure cycle periods, the pressure is increased to the P₁ within 3~7 minutes, the carbon dioxide is in the supercritical state and enters into the polymer, a volatile component is dissolved in supercritical carbon dioxide, the pressure inside the devolatilization tank is then reduced to the P₂ within 3~5 minutes, and the carbon dioxide is in the gaseous state and is discharged along with the volatile component as a mixed gas.

In some embodiments, the periodic devolatilization process includes 3~5 pressure cycle periods, and residence time of the polymer in the devolatilization tank is in a range from 20 minutes to 60 minutes, and the mixed gas of the carbon dioxide and the volatile component is discharged from an exhaust port.

In some embodiments, the supercritical carbon dioxide assisted periodic devolatilization process further includes an entrainment agent, mixed with the carbon dioxide gas and entering the devolatilization tank together; where the entrainment agent is a polar solvent, and the ratio of the carbon dioxide gas to the entrainment agent is 4-8: 1; and the entrainment agent is at least one of water vapor, acetone, ethyl ether, dichloromethane, and methyl tert-butyl ether. The supercritical carbon dioxide with typical non-polar characteristics is capable of dissolving non-polar or moderately polar solvents in the polymer, and the non-polar and/or the moderately polar solvents are removed from the polymer. However, it is less effective for polar solvents. Therefore, adding a polar solvent with low boiling point as the entrainment agent may compensate for this limitation, thereby improving the devolatilization effect.

In some embodiments, the supercritical carbon dioxide assisted periodic devolatilization process further includes: setting temperature inside the devolatilization tank to be in a range from 30°C to 60°C, injecting a mixed gas of the carbon dioxide and an entrainment agent into the devolatilization tank from a bottom of the devolatilization tank, the pressure inside the devolatilization tank being increased, and continuing to inject the mixed gas of the carbon dioxide and the entrainment agent until the pressure inside the devolatilization tank increased to a supercritical pressure value P₀ of the carbon dioxide being 7.38 MPa, where the carbon dioxide is in the supercritical state, and the interior of the devolatilization tank is in a supercritical carbon dioxide atmosphere state; injecting the polymer to be devolatilized into a top of the devolatilization tank, and forming a falling film through a falling film element, where the supercritical carbon dioxide is in full contact with the polymer and enters the polymer, the volatile component is dissolved in the supercritical carbon dioxide, and bubbles are formed on a surface of the falling film; turning on a valve of an exhaust port in response to the pressure inside the devolatilization tank reaching a set pressure value P₁ in the range from 8 MPa to 12 MPa, where the pressure inside the devolatilization tank begins to decrease, causing the bubbles on the falling film surface to be broken, a vacuum pump performs vacuuming via the exhaust port, a mixed gas of the carbon dioxide, an entrainment agent, and/or the volatile component inside the devolatilization tank is discharged via the exhaust port, and the pressure inside the devolatilization tank is decreased; the vacuum pump stopping working in response to the pressure inside the devolatilization tank being decreased to the P₂ in the range from 0.5 KPa to 1 KPa, turning off the valve, and the pressure cycle period being completed; and the pressure inside the devolatilization tank being increased again to the P₀ with concentration of the mixed gas of the carbon dioxide and the entrainment agent in the devolatilization tank increasing, where the carbon dioxide enters the supercritical state, the devolatilization tank is again in the supercritical carbon dioxide atmosphere state, the supercritical carbon dioxide is in contact with the falling film again and the bubbles are formed, the pressure is decreased again in response to the pressure reaching the set value P₁, and 3~5 pressure cycle periods are thus repeated.

In some embodiments, the polymer is a thermosensitive polymer and/or a high-viscosity polymer. The technical solutions of the present disclosure adopt a low-temperature devolatilization condition, and the residence time in the devolatilization tank is short, so that it may reduce gelation in the thermosensitive polymer to the greatest extent. At the same time, the process involving periodically-varying pressure may facilitate the defoaming of the high-viscosity polymer and enhance the rapid removal of a volatile gas, thereby improving the devolatilization efficiency and devolatilization rate.

According to another aspect, in order to realize the above devolatilization purpose, a supercritical carbon dioxide assisted periodic devolatilization device is further provided by some embodiments of the present disclosure, including a devolatilization tank, a pressure sensor, and a vacuum pump. An exhaust port is defined on a top of the devolatilization tank and is connected to the vacuum pump. The pressure sensor is connected to the devolatilization tank and the vacuum pump, respectively. A material port is defined on the top of the devolatilization tank, a discharge opening and a gas inlet are defined on a bottom of the devolatilization tank, respectively, a polymer to be devolatilized is injected into the devolatilization tank via the material port, a devolatilized polymer is discharged from the devolatilization tank via the discharge opening, and the carbon dioxide gas enters the devolatilization tank via the gas inlet; the devolatilization tank is arranged with a porous distributor and a falling film element, and the falling film element is located right below the porous distributor. The material port extends into the devolatilization tank and is connected to the porous distributor, the polymer flows into the porous distributor via the material port and is evenly distributed downward into the falling film element to form a ring-shaped falling film; and the gas inlet extends into the devolatilization tank and forms a ring-shaped output port, and the carbon dioxide spreads upwards into the devolatilization tank via the output port and is in full contact with the falling film flowing downwards.

In some embodiments, the gas inlet is connected to a vaporizer, a vaporized stripping agent is mixed with the carbon dioxide, and a mixture of the vaporized stripping agent and the carbon dioxide is injected into the devolatilization tank via the gas inlet.

In some embodiments, a melt pump is arranged on the discharge opening, and the devolatilized polymer is extruded from the discharge opening into a collection device through the melt pump.

The thermosensitive polymer refers to the polymer whose melt has temperature-sensitive characteristics. A cross-linking reaction, a degradation reaction, or other reactions may occur when the thermosensitive polymer is heated to a certain temperature range, resulting in significant changes in the appearance or property thereof. Polymer devolatilization is generally achieved by increasing the temperature and residence time of the devolatilizer under a low atmospheric pressure. However, for the thermosensitive polymer, the low atmospheric pressure may easily cause the high-viscosity fluid block an outlet, while increasing temperature may cause discoloration or denaturation of a sensitive material (i.e., a thermosensitive material), affecting the performance of a devolatilized resin. Therefore, for the melt of the thermosensitive polymer, high temperature and longer residence time are not the best technical means to achieve efficient devolatilization. For example, at the temperatures ranging from 40°C to 50°C, a chemical structure of polypropylene ether may change, causing the polymer to produce cross-linking reaction and gelation, and the appearance and various mechanical properties of the polymer may also change significantly. Therefore, the conventional devolatilization method cannot be used for the thermosensitive polymer.

The thermosensitive polymer mainly includes a polymer containing polymerizable carbon-carbon unsaturation and a polymer containing aliphatic bound halogen atoms. The former mainly includes conjugated dienes, such as a polymer of butadiene or cyclopentadiene. The carbon-carbon unsaturation may polymerize at high temperature during the devolatilization process, leading to the introduction of branches in the polymer or further crosslinking and gelation. The latter is a polymer containing aliphatic bound halogen atoms, mainly caused by thermal instability caused by halogen atoms. Under a high-temperature condition, the type of polymer is prone to losing halogen, leading to thermal instability. On the one hand, a volatile component of the polymer is usually mainly released in the form of hydrogen halides (i.e., HF, HCl, HBr, etc.) or halogen gases (i.e., F₂, Cl₂, Br₂). However, the halogen gases have a certain corrosiveness, especially HF, which poses certain risks when directly devolatilized and released. On the other hand, too high devolatilization temperature or prolonged duration may easily lead to the removal of halogens, which may cause the formation of aliphatic carbon-carbon double bonds between polymers and polymerization, thereby causing crosslinking and gelation.

Obviously, the main problem to be solved for the thermosensitive polymer is to reduce the devolatilization temperature and shorten the devolatilization time to prevent gelation.

In view of the above technical problem, the present disclosure adopts a supercritical carbon dioxide assisted periodic devolatilization process, including: reducing the devolatilization temperature, and enhancing the devolatilization effect while periodically discharging without affecting the continuous devolatilization process. The process provided by the present disclosure is not an intermittent devolatilization, and may greatly reduce the energy consumption of devolatilization, thereby improving the cost-effectiveness of the devolatilization process.

In some embodiments, the devolatilization principle of the present disclosure is as follows.

First, the principle of supercritical devolatilization is as follows. In the supercritical state, the supercritical fluid is in contact with the polymer to be separated. The supercritical carbon dioxide, with non-polar characteristics, may selectively dissolve components from the high molecular weight polymer based on the polarity, boiling points, and molecular weights thereof, and separate the components from the polymer, especially for the dissolution and removal of volatile gases with nonpolar and weakly polar properties. At the same time, the solubility of polar volatile gases is improved by adding a polar solvent as the entrainment agent, thereby improving the devolatilization performance.

At the same time, by periodically adjusting the temperature and a pressure value in the devolatilization tank, the carbon dioxide is converted between the supercritical state and a state where the carbon dioxide (CO₂) is an ordinary gas by means of reducing pressure and increasing temperature, and the volatile component in the polymer are completely or basically separated, so as to achieve the purpose of separation and purification. Therefore, the process of the supercritical carbon dioxide fluid devolatilization is a combination of a contact process, a dissolution process, and a separation process. At the same time, since the contact between the carbon dioxide and the polymer occurs when the polymer is in a falling film state, there is no occurrence of the polymer encapsulating the carbon dioxide molecules. When the carbon dioxide is converted between the supercritical state and an ordinary gaseous state, the polymer has almost no effect on the carbon dioxide.

In simple terms, the supercritical carbon dioxide is dissolved into the polymer, enhancing the polymer surface to refresh. The solubility of the volatile component in the supercritical carbon dioxide is greater than the solubility of the volatile component in the polymer. Therefore, the volatile component absorbs heat to be vaporized and are dissolved into the carbon dioxide, and bubbles are formed inside the polymer and/or on the surface of the polymer, thereby promoting the removal of the volatile component.

In some embodiments, the volatile component is highly soluble in the supercritical carbon dioxide, and thus the present disclosure utilizes the performance to dissolve a large amount of volatile component in the supercritical carbon dioxide, and the volatile component is carried out of the devolatilization tank with the airflow. In this way, it may be possible to increase the concentration gradient of the volatile component in the devolatilization tank, thereby increasing the mass transfer driving force to promote the removal of the volatile component.

However, the problem with using the supercritical carbon dioxide for devolatilization is that under the vacuum conditions, when a certain temperature is reached, the volatile gases may be vaporized inside the polymer, or form bubbles on the polymer surface. However, due to the viscosity of the polymer, the bubbles are extremely difficult to be broken. When the conditions are removed, the volatile component may return to the polymer, leading to devolatilization failure. Therefore, defoaming also plays an extremely important role in the entire devolatilization process. The devolatilization under the supercritical carbon dioxide conditions also faces the problem.

In view of the above-mentioned problem, the present disclosure adopts periodic pressure to break bubbles/defoam, and the specific principle is as follows. When the carbon dioxide and the entraining agent enter the devolatilization tank, the pressure inside the devolatilization tank is gradually increased. When the pressure reaches a set threshold ranging from 8 MPa to 12 MPa, an air pressure valve is quickly turned on, and in a very short time (3~5 minutes), the devolatilization tank is performed vacuuming to a set value (the pressure in a range from 0.5 KPa to 1 KPa). During the process, there is a huge change in the pressure inside the devolatilization tank, which promotes the bubbles to be broken. The mixed gas of the carbon dioxide and the entrainment agent is discharged from the exhaust port along with the volatile gases, thereby achieving devolatilization. As the gas is discharged, the pressure is gradually increased. At the same time, the discharge valve is turned on, the melt pump may discharge the polymer, and a next cycle starts. It is obvious that the technical solution of the present disclosure is also applicable to the devolatilization of the high-viscosity polymer. For the high-viscosity fluid, the defoaming technology is the most important technical problem in the devolatilization process. Therefore, by adopting the technical solutions of the present disclosure, it may be possible to promote the rapid defoaming and devolatilization of the high viscosity fluids, and improve the devolatilization efficiency.

By adopting the above-mentioned technical solutions, the present disclosure has achieved the following technical effects.

1. In order to implement devolatilization of a heat-sensitive polymer, the present disclosure makes use of the principle that the solubility of the volatile component in the supercritical carbon dioxide is greater than the solubility of the volatile component in the polymer and that periodic pressure is used to promote defoaming. In this way, it may efficiently devolatilize at a low temperature with a short devolatilization time, enable the discharge of materials while devolatilizing, reduce the content of volatile component in the devolatilized polymer to below 50 ppm, and have high efficiency.

2. The devolatilization device provided by the present disclosure only needs simple improvement on the basis of the existing devolatilization tank, which has the advantages of a simple structure, resource saving, and a good devolatilization effect.

3. The technical solutions of the present disclosure are particularly suitable for the devolatilization of the thermosensitive polymer and the high-viscosity polymer. For the high-viscosity fluid, the defoaming technology is the key technical problem in the devolatilization process. Therefore, by adopting the technical solutions of the present disclosure, it may be possible to promote the rapid defoaming and devolatilization of the high viscosity fluids, and improve the devolatilization efficiency.

4. In the technical solution of the present disclosure, the supercritical carbon dioxide with typical non-polar characteristics is capable of dissolving non-polar or moderately polar solvents in the polymer, and the non-polar and/or the moderately polar solvents are removed from the polymer. Therefore, adding a polar solvent with low boiling point as the entrainment agent may remove polar solvent from the volatile component, and the supercritical carbon dioxide and the entrainment agent complement each other, thereby improving the devolatilization effect.

### BRIEF DESCRIPTION OF THE DRAWINGS

FIG. 1 a structural schematic view of a devolatilization device according to a first example of the present disclosure.
FIG. 2 a period schematic view of a pressure cycle according to a first example of the present disclosure.

Reference numerals in drawings: 1, devolatilization tank; 2, gas inlet; 3, discharge opening; 4, output port; 5, falling film element; 6, porous distributor; 7, pressure sensor; 8, vacuum valve; 9, vacuum pump; 10, material port; 11, exhaust port.

### DETAILED DESCRIPTION

Technical solutions in some embodiments of the present disclosure will be described clearly and completely in conjunction with the drawings in some embodiments of the present disclosure. Apparently, the described embodiments are only a part of the embodiments of the present disclosure, not all the embodiments. Based on the embodiments of the present disclosure, those skilled in the art may acquire other embodiments without making creative efforts. All these embodiments fall within the protection scope of the present disclosure.

### A first example

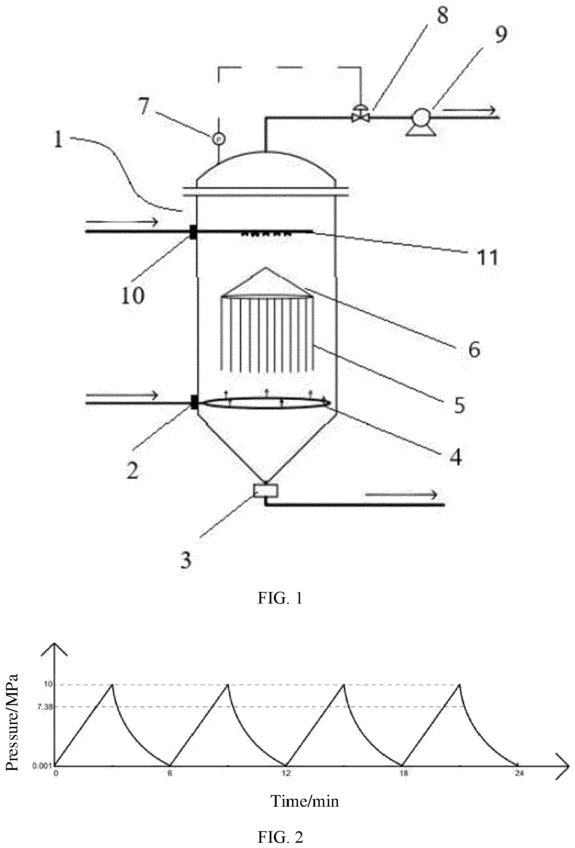

As shown in FIG. 1, a supercritical carbon dioxide assisted periodic devolatilization device is provided by some embodiments of the present disclosure. The device includes a devolatilization tank 1, a pressure sensor 7, and a vacuum pump 9. An exhaust port 11 is defined on a top of the devolatilization tank 1 and is connected to the vacuum pump 9. The pressure sensor 7 is connected to the devolatilization tank 1 and the vacuum pump 9, respectively. The pressure sensor 7 is connected to a vacuum valve 8 of the vacuum pump 9, so as to set a critical pressure of the pressure sensor 7. When a pressure inside the devolatilization tank 1 reaches the critical pressure, the vacuum valve 8 is turned on/off, and the vacuum pump 9 starts working or stops working. In some embodiments, an outer wall of the devolatilization tank 1 is arranged with an insulation jacket, and the insulation jacket is arranged with a circulating hot medium or a circulating cold medium.

A material port 10 is defined on the top of the devolatilization tank 1, a discharge opening 3 and a gas inlet 2 are defined on a bottom of the devolatilization tank 1, respectively. A polymer to be devolatilized is injected into the devolatilization tank 1 via the material port 10. A devolatilized polymer is discharged from the devolatilization tank 1 via the discharge opening 3. A carbon dioxide gas enters the devolatilization tank 1 via the gas inlet 2.

The devolatilization tank 1 is arranged with a porous distributor 6 and a falling film element 5. The falling film element 5 is located right below the porous distributor 6. The material port 10 extends into the devolatilization tank 1 and is connected to the porous distributor 6. The polymer flows into the porous distributor 6 via the material port 10 and is evenly distributed downward to the falling film element 5 to form a ring-shaped falling film.

The gas inlet 2 extends into the devolatilization tank 1 and forms a ring-shaped output port 4. The carbon dioxide spreads upwards into the devolatilization tank 1 via the output port 4, so that the carbon dioxide is in full contact with the falling film flowing downwards.

In some embodiments, the gas inlet 2 is connected to a vaporizer, and a vaporized entrainment agent is mixed with the carbon dioxide, and a mixed gas of the vaporized stripping agent and the carbon dioxide is injected into the devolatilization tank 1 via the gas inlet 2. The vaporization temperature is set based on the boiling point of the entrainment agent. For example, when the entrainment agent is water vapor, the vaporization temperature is set to 100°C. When the entrainment agent is dichloromethane, the vaporization temperature is set to 40°C.

In some embodiments, a melt pump is arranged on the discharge opening 3. The devolatilized polymer is extruded from the discharge opening into a collection device or into a packaging container through the melt pump.

As shown in FIG. 2, as the carbon dioxide enters the devolatilization tank, the pressure inside the devolatilization tank is increased. When the pressure reaches P₀ of 7.38 MPa, the devolatilization tank provides a condition of being in a supercritical state for the carbon dioxide. The polymer is pumped into the devolatilization tank to form a falling film, and supercritical carbon dioxide is in contact with the polymer to realize devolatilization. When the pressure inside the devolatilization tank reaches P₁, the devolatilization tank performs vacuuming again, and the pressure drops rapidly in a very short time (i.e., 3~5 minutes) until the pressure reaches P₂, so as to be in a vacuum state, thereby achieving one pressure cycle. During a process of performing vacuuming, a volatile component, the carbon dioxide, and the entrainment agent are simultaneously extracted.

Then a next pressure cycle enters. A whole devolatilization process has 3~5 pressure cycle periods, periodic pressure changes are achieved in the devolatilization tank 1, so that during the devolatilization process of the polymer in the devolatilization tank 1, the carbon dioxide is converted/switched between a supercritical state and a gaseous state. In the supercritical state, the carbon dioxide enters the polymer, and the volatile in the polymer is dissolved. As the pressure is gradually increased, bubbles are broken, and the carbon dioxide is discharged from the gas mixture in the gaseous state. At the same time, under vacuum conditions inside the devolatilization tank, the amount of the volatile component is increased or the bubbles are formed on the surface of the polymer. In the next pressure cycle, as the pressure is increased, the carbon dioxide enters a critical state, the bubbles are broken, and a un-bubbled volatile component is directly extracted and separated from the polymer by the supercritical carbon dioxide. High efficiency devolatilization may be achieved in several pressure cycle periods. In addition, due to a periodic change of the pressure inside the devolatilization tank, it may be possible to choose an appropriate time for unloading, i.e., either unloading in batches or unloading all at once.

During the pressure cycle period, the pressure is increased to the P₁ within 3~7 minutes, the carbon dioxide is in the supercritical state and enters into the polymer, the volatile component is dissolved in the supercritical carbon dioxide, the pressure inside the devolatilization tank is then reduced to the P₂ within 3~5minutes, and the carbon dioxide is in the gaseous state and is discharged along with the volatile component as a mixed gas.

The periodic devolatilization process includes 3~5 pressure cycle periods. Residence time of the polymer in the devolatilization tank is in a range from 20 minutes to 60 minutes. The mixed gas of the carbon dioxide and the volatile component is discharged from the exhaust port.

In some embodiments, the porous distributor 6 and the falling film element 5 in the embodiments may adopt the structure in the related art. For example, the Chinese patent publication No. CN110639461A discloses a falling-film type devolatilizer and a falling film element thereof. The specific structure of the porous distributor 6 and the falling film element 5of the embodiments may also be realized by simple improvement on the basis of the above-mentioned falling-film type devolatilizer, as long as it may achieve uniform distribution and form a stable falling film.

In some embodiments, the polymer devolatilization in the embodiments may include the following operations.
(1) A mixed gas of the carbon dioxide and the entrainment agent is injected into the devolatilization tank from the gas inlet 2. As the gas volume increases, the pressure inside the devolatilization tank is gradually increased. The mixed gas of the carbon dioxide and the entrainment agent continues to be injected until the pressure inside the devolatilization tank increased to a supercritical pressure value P₀ of the carbon dioxide being 7.38 MPa. The carbon dioxide is in the supercritical state, and the interior of the devolatilization tank is in a supercritical carbon dioxide atmosphere state. In some embodiments, the entrainment agent is at least one of water vapor, acetone, ethyl ether, dichloromethane, and methyl tert-butyl ether.
   In some embodiments, an injection rate of the carbon dioxide is in a range from 4.0 m³/h to 12 m³/h. A flow rate of the polymer to be devolatilized is in a range from 1 kg/h to 10 kg/h.
(2) The polymer to be devolatilized is melted by the melt pump and injected into the devolatilization tank from the material port 10. A falling film is formed through the falling film element 5. The supercritical carbon dioxide may be in full contact with the polymer and enter the polymer. The volatile component is dissolved in the supercritical carbon dioxide and forms the bubbles on the surface of the falling film.
(3) The pressure inside the devolatilization tank reaching a set pressure value P₁ in the range from 8 MPa to 12 MPa. The valve of the exhaust port is turned on, and the pressure inside the devolatilization tank begins to decrease. The vacuum pump performs vacuuming via the exhaust port, a mixed gas of the carbon dioxide, the entrainment agent, and/or the volatile component inside the devolatilization tank is discharged via the exhaust port, and the pressure inside the devolatilization tank is decreased. In some embodiments, the P₁ is 10 MPa.
   During a stage from the P₁ the P₀, the pressure inside the devolatilization tank continues to be increased, and the carbon dioxide is in a supercritical state. At this time, the devolatilization tank is in a stage of the supercritical carbon dioxide extracting the volatile component.
(4) When the pressure inside the devolatilization tank 1 is decreased to the P₂ in the range from 0.5 KPa to 1 KPa, the vacuum pump 9 stops working, and the vacuum valve 8 is turned off. At this point, one pressure cycle period is completed.
(5) As concentration of the mixed gas of the carbon dioxide and the entrainment agent in the devolatilization tank increases, the pressure inside the devolatilization tank is increased again to the P₀, the carbon dioxide enters the supercritical state, the devolatilization tank is again in a supercritical carbon dioxide atmosphere state, and the supercritical carbon dioxide is in contact with the falling film again and the bubbles are formed. The pressure is decreased again when the pressure reaches the set value P₁, and 3~5 pressure cycle periods are thus repeated. In a last pressure cycle period, the discharge valve is turned on, and the polymer is extruded from the melt pump.

In some embodiments, the high-viscosity polymer and/or the thermosensitive polymer are taken as an example to further illustrate the technical solutions of the first example. The injection rate of the carbon dioxide is in the range from 4.0 m³/h to 12 m³/h. The flow rate of the polymer to be devolatilized is in the range from 1 kg/h to 2 kg/h.

### A second example

In the example, the high-viscosity polymer is taken as an example, including, but not limited to, styrene acrylonitrile (SAN) resin, polymethyl methacrylate (PMMA), polyacrylonitrile (PAN), etc. The devolatilization characteristics of the high-viscosity polymer is that there are many bubbles during devolatilization, but it is not easy to completely remove the bubbles. In the example, the process is a periodic devolatilization process, which includes a plurality of pressure cycle periods. The carbon dioxide is used as a supercritical medium. The pressure is firstly increased and then decreased during each of the plurality of pressure cycle periods, and the carbon dioxide is converted between a supercritical state and a gaseous state to realize devolatilization of a polymer.

In the embodiments, PMMA is taken as an example. In the devolatilization process of PMMA in the related art, an extruder extrusion method is mostly adopted for devolatilization. The Chinese patent publication No. CN113459324A discloses a devolatilization screw extruder device and a method for producing PMMA by using the device, which uses the devolatilization screw extruder device to remove monomers and oligomers in the polymer. The principle of the extruder devolatilization mainly utilizes a difference in boiling points between the polymer and the volatile component to adjust a condensation temperature difference, so as to remove a low molecular weight polymer and a solvent with low boiling point by means of liquefaction. However, for the extruder device, the polymer surface is hardly refreshed, and the volatile component is encapsulated in the polymer during an extrusion process and is difficult to flow out of the polymer, which affects the removal of the volatile component. For the PMMA product, the content of the volatile component is in a range from 3000 ppm to 5000 ppm. After devolatilization by using the extruder, the content of the volatile component may be decreased to be in a range from 2000 ppm to 3500 ppm, which does not meet the quality requirements of a high-quality PMMA resin product in the market.

In the example, the devolatilization device provided in the first example is utilized to devolatilize PMMA, and the specific process includes the following operations.
(1) A mixed gas of the carbon dioxide and water vapor as the entrainment agent is injected into the devolatilization tank from the gas inlet. As the gas volume increases, the pressure inside the devolatilization tank is gradually increased. The mixed gas of the carbon dioxide and the entrainment agent continues to be injected until the pressure inside the devolatilization tank increased to a supercritical pressure value P₀ of the carbon dioxide being 7.38 MPa. The carbon dioxide is in the supercritical state, and the interior of the devolatilization tank is in a supercritical carbon dioxide atmosphere state. A ratio of the carbon dioxide to the entrainment agent is selected as 4:1.
(2) A high-viscosity polymer PMMA to be devolatilized is melted by using a melt pump and is extruded into the devolatilization tank via a material inlet. A falling film is formed through a falling film element. The supercritical carbon dioxide diffused in the devolatilization tank may be in full contact with the falling film and enter the polymer. The volatile component is dissolved in the supercritical carbon dioxide, and bubbles are formed on the surface of the falling film.
(3) As the pressure is gradually increased, the bubbles on the falling film surface is broken under the pressure. When the pressure reaches the set pressure value P₁ which is 10 MPa, the valve of the exhaust port is turned on, and the pressure inside the devolatilization tank begins to decrease. The vacuum pump performs vacuuming via the exhaust port, a mixed gas of the carbon dioxide, the entrainment agent, and/or the volatile component inside the devolatilization tank is discharged via the exhaust port, the pressure inside the devolatilization tank is decreased until the pressure is lower than P₀, and the devolatilization tank is in a the carbon dioxide atmosphere state.
(4) When the pressure inside the devolatilization tank is decreased to the P₂ in the range from 0.5 KPa to 1 KPa, the vacuum pump stops working, and the vacuum valve is turned off. At this point, the pressure cycle period is completed.
(5) The mixed gas of the carbon dioxide and the entrainment agent continues to enter the devolatilization tank. As concentration of the gas increases, the pressure inside the devolatilization tank is increased again to the P₀, the carbon dioxide is in the supercritical state, and the devolatilization tank is again in the supercritical carbon dioxide atmosphere state. The pressure is decreased again when the pressure reaches the set value P₁, and five pressure cycle periods are thus repeated. In a last pressure cycle period, the discharge valve is turned on, and the high-viscosity polymer is extruded from the melt pump.

In some embodiments, a preheater including PMMA resin is preheated to be in a range from 140°C to 160°C, and the PMMA resin is extruded into the devolatilization tank through the melt pump. The temperature in the devolatilization tank is in a range from 120°C to 140°C. A devolatilized PMMA resin is obtained in a solution collecting area at the bottom of the devolatilization tank. The solvent is discharged from the exhaust port along with the carbon dioxide and other volatile components.

The content of the volatile component in PMMA before entering the devolatilization tank is 4500 ppm. The content of the volatile component in the PMMA resin extruded from the discharge opening is 1000 ppm, which meets the requirements.

### A third example

In the example, polystyrene (PS) is taken as an example to further illustrate the technical solutions of the present disclosure.

The Chinese patent publication No. CN101220109A discloses a supercritical fluid devolatilization method for polystyrene. In the supercritical fluid devolatilization method for polystyrene, the carbon dioxide is used as the supercritical medium to achieve devolatilization of polystyrene, which may reduce residual monomers in the polymer to below 1 ppm. However, the devolatilization process is time-consuming, taking at least over 6 hours to complete, and has a low devolatilization efficiency. In addition, the process uses polystyrene resin pellets as a raw material and employs an intermittent fixed-bed for devolatilization, that is, the devolatilization is carried out after the production is completed. The process works better for small-diameter polystyrene resin pellets. However, for particles with the required size, the process may be ineffective. Therefore, the practical significance is limited.

In the embodiments of the present disclosure, the devolatilization process is carried out after processing the polystyrene, followed by granulation process after the devolatilization process is completed.

The impure polystyrene resin to be devolatilized is pumped into the devolatilization tank through the melt pump, and the specific process includes the following operations.
(1) A mixed gas of the carbon dioxide and ethyl ether as the entrainment agent is injected into the devolatilization tank from the gas inlet. As the gas volume increases, the pressure inside the devolatilization tank is gradually increased. The mixed gas of the carbon dioxide and the entrainment agent continues to be injected until the pressure inside the devolatilization tank increased to a supercritical pressure value P₀ of the carbon dioxide being 7.38 MPa. The carbon dioxide is in the supercritical state, and the interior of the devolatilization tank is in a supercritical carbon dioxide atmosphere state. A ratio of the carbon dioxide to the entrainment agent is selected as 8: 1.
(2) The melting temperature of polystyrene is in a range from 140°C to 180°C. The polystyrene to be devolatilized is melted by using a melt pump and is extruded into the devolatilization tank via a material inlet. A falling film is formed through a falling film element. The supercritical carbon dioxide diffused in the devolatilization tank may be in full contact with the falling film and enter the polymer. The volatile component is dissolved in the supercritical carbon dioxide, and bubbles are formed on the surface of the falling film.
(3) As the pressure is gradually increased, the bubbles on the falling film surface are broken under the pressure. When the pressure reaches the set pressure value P₁ which is 10 MPa, the valve of the exhaust port is turned on, and the pressure inside the devolatilization tank begins to decrease. The vacuum pump performs vacuuming via the exhaust port, a mixed gas of the carbon dioxide, the entrainment agent, and/or the volatile component inside the devolatilization tank is discharged via the exhaust port, the pressure inside the devolatilization tank is decreased until the pressure is lower than P₀, and the devolatilization tank is in a the carbon dioxide atmosphere state.
(4) When the pressure inside the devolatilization tank is decreased to the P₂ in the range from 0.5 KPa to 1 KPa, the vacuum pump stops working, and the vacuum valve is turned off. At this point, the pressure cycle period is completed.
(5) The mixed gas of the carbon dioxide and the entrainment agent continues to enter the devolatilization tank. As concentration of the gas increases, the pressure inside the devolatilization tank is increased again to the P₀, the carbon dioxide is in the supercritical state, and the devolatilization tank is again in the supercritical carbon dioxide atmosphere state. The pressure is decreased again when the pressure reaches the set value P₁, and three pressure cycle periods are thus repeated. In a last pressure cycle period, the discharge valve is turned on, and PS is extruded from the melt pump.

In some embodiments, a preheater including PS resin is preheated to be in a range from 200°C to 220°C, and the PS resin is extruded into the devolatilization tank through the melt pump. The temperature in the devolatilization tank is in a range from 200°C to 210°C. A devolatilized PS resin is obtained in a solution collecting area at the bottom of the devolatilization tank. The solvent is discharged from the exhaust port along with the carbon dioxide and other volatile components.

The entire devolatilization process may be completed in 15 minutes, thereby greatly reducing the devolatilization time. In the embodiment, the flow rate of the carbon dioxide and an acetone gas is in a range from 8.0 m³/h to 12 m³/h., and the injection rate of PS is in the range from 1.0 m³/h to 2 m³/h. By using high flow rate of the carbon dioxide gas and low injection rate of PS, on the one hand, the contact time between the supercritical medium and the polymer may be improved, thereby shortening the entire time. At the same time, due to the fast flow rate of PS, the interface of the falling film may be quickly refreshed, and may be in full contact with the highspeed injected of the carbon dioxide, thereby improving the devolatilization efficiency.

By using the above devolatilization process, the content of styrene (ST) monomer in PS is decreased from 8000 ppm before devolatilization to 50 ppm after devolatilization.

### A fourth example

In the example, polyvinyl chloride (PVC) is taken as an example to further illustrate the technical solutions of the present disclosure.

PVC is a typical thermosensitive polymer, and the polymerization temperature has a great impact on molecular weight of PVC. Generally, low polymerization temperature results in high molecular weight, and the size of the molecular weight has a significant impact on the melting point of the polymer. In actual production, the polymer with a molecular weight ranging from 50000 to 110000 is most widely used, which has a glass transition temperature of the polymer is in a range from 80°C to 90°C. The polymer becomes a viscoelastic state at 130°C, is in a viscous flow state at around 170°C, and begins to decompose and produce hydrogen chloride at the temperature exceeding 180°C. Therefore, strict temperature control is required for production and devolatilization to prevent the polymer from decomposing. In the related art, an extruder is usually used to extrude and devolatilize.

In the embodiments of the present disclosure, the devolatilization process is carried out after processing PVC, followed by granulation process after the devolatilization process is completed.

The impure PVC resin to be devolatilized is pumped into the devolatilization tank through the melt pump, and the melting temperature is in a range from 150°C to 170°C. The specific process includes the following operations.

A mixed gas of the carbon dioxide and acetone or ethyl ether as the entrainment agent is injected into the devolatilization tank from the gas inlet. As the gas volume increases, the pressure inside the devolatilization tank is gradually increased. The mixed gas of the carbon dioxide and the entrainment agent continues to be injected until the pressure inside the devolatilization tank increased to a supercritical pressure value P₀ of the carbon dioxide being 7.38 MPa. The carbon dioxide is in the supercritical state, and the interior of the devolatilization tank is in a supercritical carbon dioxide atmosphere state. A ratio of the carbon dioxide to the entrainment agent is selected as 6:1. Vinyl chloride is dissolved well in acetone or ethyl ether.

(2) The melting temperature of PVC is in a range from 150°C to 170°C, and the temperature inside the devolatilization tank is in a range from 140°C to 150°C. The polystyrene to be devolatilized is melted by using a melt pump and extruded into the devolatilization tank via a material inlet. A falling film is formed through a falling film element. The supercritical carbon dioxide diffused in the devolatilization tank may be in full contact with the falling film and enter the polymer. The volatile component is dissolved in the supercritical carbon dioxide, and bubbles are formed on the surface of the falling film.

(3) As the pressure is gradually increased, the bubbles on the falling film surface is broken under the pressure. When the pressure reaches the set pressure value P₁ which is 10 MPa, the valve of the exhaust port is turned on, and the pressure inside the devolatilization tank begins to decrease. The vacuum pump performs vacuuming via the exhaust port, a mixed gas of the carbon dioxide, the entrainment agent, and/or the volatile component inside the devolatilization tank is discharged via the exhaust port, the pressure inside the devolatilization tank is decreased until the pressure is lower than P₀, and the devolatilization tank is in a the carbon dioxide atmosphere state.

(4) When the pressure inside the devolatilization tank is decreased to the P₂ in the range from 0.5 KPa to 1 KPa, the vacuum pump stops working, and the vacuum valve is turned off. At this point, the pressure cycle period is completed.

(5) The mixed gas of the carbon dioxide and the entrainment agent continues to enter the devolatilization tank. As concentration of the gas increases, the pressure inside the devolatilization tank is increased again to the P₀, the carbon dioxide is in the supercritical state, and the devolatilization tank is again in the supercritical carbon dioxide atmosphere state. The pressure is decreased again when the pressure reaches the set value P₁, and three pressure cycle periods are thus repeated. In a last pressure cycle period, the discharge valve is turned on, and PVC is extruded from the melt pump.

In some embodiments, a preheater including PVC resin is preheated to be in a range from 150°C to 170°C, and the PVC resin is extruded into the devolatilization tank through the melt pump. The temperature in the devolatilization tank is in a range from 200°C to 210°C. A devolatilized PVC resin is obtained in a solution collecting area at the bottom of the devolatilization tank. The solvent is discharged from the exhaust port along with the carbon dioxide and other volatile components.

The entire devolatilization process may be completed in 15 minutes, thereby greatly reducing the devolatilization time. In the embodiment, the flow rate of the carbon dioxide and acetone gas is in a range from 8.0 m³/h to 12 m³/h., and the injection rate of PVC is in the range from 1.0 m³/h to 2 m³/h. By using high flow rate of the carbon dioxide gas and low injection rate of PVC, on the one hand, the contact time between the supercritical medium and the polymer may be improved, thereby shortening the entire time. At the same time, due to the fast flow rate of PS, the interface of the falling film may be quickly refreshed, and may be in full contact with the highspeed injected of the carbon dioxide, thereby improving the devolatilization efficiency.

By using the above devolatilization process, the content of vinyl chloride monomer in PVC is decreased from 7500 ppm before devolatilization to 120 ppm after devolatilization.

Polymers with halogenated unsaturated carbon-carbon double bonds, such as polyvinyl fluoride, that share the same devolatilization principle as the embodiments, may all be devolatilized by using the above-mentioned devolatilization process.

Especially for polyvinyl fluoride, a volatile component thereof contains a strong corrosive gas, such as hydrogen fluoride (HF). A high proportion of water vapor may be used as an entraining agent, which may dilute the concentration of hydrogen fluoride, thereby reducing corrosiveness and enhancing the safety factor of the devolatilization process.

### A fifth example

In the example, trans butadiene rubber is taken as an example to further illustrate the technical solutions of the present disclosure.

Trans butadiene rubber is a typical fluid with high viscosity, elasticity, and thermal sensitivity. Thermosensitive and high-viscosity properties of trans butadiene rubber greatly increase the difficulty of devolatilization. Reducing volatile component of trans butadiene rubber has always been a pressing problem in this industry. The Chinese patent publication No. CN111607022A discloses a devolatilization method for trans butadiene rubber. However, in the related art, the method described in CN111607022A uses a static extraction tank where the polymer is in a static state. The mass of polymer devolatilized per batch in the extraction tank is in a range from 100g to 500g, and the polymer interface is not refreshed, resulting in extremely low devolatilization efficiency.

In the embodiment, the devolatilization device provided in the first example is utilized to achieve diffusion devolatilization. Vacuum level and temperature are key factors affecting devolatilization. The mass transfer rate of the volatile component determines the devolatilization effect. By improving the interface refreshing speed, the vacuum of the system, and optimal temperature, the full devolatilization of the volatile component is achieved. Obviously, the devolatilization effect of diffusion devolatilization is significantly better than that of static devolatilization.

In the embodiment, the devolatilization device provided in the first example is utilized to devolatilize trans butadiene rubber, and the specific process includes the following operations.
(1) A mixed gas of the carbon dioxide and dichloromethane as the entrainment agent is injected into the devolatilization tank from the gas inlet. As the gas volume increases, the pressure inside the devolatilization tank is gradually increased. The mixed gas of the carbon dioxide and the entrainment agent continues to be injected until the pressure inside the devolatilization tank increased to a supercritical pressure value P₀ of the carbon dioxide being 7.38 MPa. The carbon dioxide is in the supercritical state, and the interior of the devolatilization tank is in a supercritical carbon dioxide atmosphere state. The entrainment agent is water vapor, and a ratio of the carbon dioxide to the entrainment agent is selected as 6:1.
(2) A thermosensitive and high-viscosity trans butadiene rubber to be devolatilized is melted by using a melt pump and extruded into the devolatilization tank via a material inlet. A falling film is formed through a falling film element. The supercritical carbon dioxide diffused in the devolatilization tank may be in full contact with the falling film and enter the polymer. The volatile component is dissolved in the supercritical carbon dioxide, and bubbles are formed on the surface of the falling film.
(3) As the pressure is gradually increased, the bubbles on the falling film surface are broken under the pressure. When the pressure reaches the set pressure value P₁ which is 12 MPa, the valve of the exhaust port is turned on, and the pressure inside the devolatilization tank begins to decrease. The vacuum pump performs vacuuming via the exhaust port, a mixed gas of the carbon dioxide, the entrainment agent, and/or the volatile component inside the devolatilization tank is discharged via the exhaust port, the pressure inside the devolatilization tank is decreased until the pressure is lower than P₀, and the devolatilization tank is in a carbon dioxide atmosphere state.
(4) When the pressure inside the devolatilization tank is decreased to the P₂ in the range from 0.5 KPa to 1 KPa, the vacuum pump stops working, and the vacuum valve is turned off. At this point, the pressure cycle period is completed.
(5) The mixed gas of the carbon dioxide and the entrainment agent continues to enter the devolatilization tank. As concentration of the gas increases, the pressure inside the devolatilization tank is increased again to the P₀, the carbon dioxide is in the supercritical state, and the devolatilization tank is again in the supercritical carbon dioxide atmosphere state. The pressure is decreased again when the pressure reaches the set value P₁, and 3~5 pressure cycle periods are thus repeated. In a last pressure cycle period, the discharge valve is turned on, and the high-viscosity polymer is extruded from the melt pump.

In some embodiments, the trans butadiene rubber is pumped into the devolatilization tank through the melt pump. The temperature in the devolatilization tank is in a range from 40°C to 60°C. A devolatilized trans butadiene rubber product is obtained in a solution collecting area at the bottom of the devolatilization tank.

In the trans butadiene rubber product extruded from the discharge opening, the content of isoprene is decreased from 3600 ppm to 310 ppm, and the content of dimer is decreased from 5000 ppm to 460 ppm, which meets the requirements.

As can be seen from the second example to the fifth example, the technical solutions of the present disclosure have a wide application range, and are particularly efficient for high-viscosity and thermosensitive polymers in devolatilization.

The foregoing description of the embodiments of the disclosed present disclosure enables those skilled in the art to implement or utilize the present disclosure. Various modifications are apparent to those skilled in the art and can be made without departing from the spirit or scope of the defined general principles as set forth herein. Therefore, the present disclosure is not intended to be limited to the specific embodiments shown and described herein, but to cover the broadest scope consistent with the principles and novel features disclosed herein.

## Claims

1. A supercritical carbon dioxide assisted periodic devolatilization process, **characterized by** comprising:
a plurality of pressure cycle periods;
wherein carbon dioxide is used as a supercritical medium, the pressure is firstly increased and then decreased during each of the plurality of pressure cycle periods, and the carbon dioxide is converted between a supercritical state and a gaseous state to realize devolatilization of a polymer.

2. The supercritical carbon dioxide assisted periodic devolatilization process according to claim1, wherein during the each of the plurality of pressure cycle periods, the pressure in a devolatilization tank is firstly increased to P₁ in a range from 8 MPa to 12 MPa and then decreased to P₂ in a range from 0.5 KPa to 1 KPa.

3. The supercritical carbon dioxide assisted periodic devolatilization process according to claim 2, wherein during the each of the plurality of pressure cycle periods, the pressure is increased to the P₁ within 3~7 minutes, the carbon dioxide is in the supercritical state and enters into the polymer, a volatile component is dissolved in supercritical carbon dioxide, the pressure inside the devolatilization tank is then reduced to the P₂ within 3~5 minutes, and the carbon dioxide is in the gaseous state and is discharged along with the volatile component as a mixed gas.

4. The supercritical carbon dioxide assisted periodic devolatilization process according to claim 3, wherein the periodic devolatilization process comprises 3~5 pressure cycle periods, and residence time of the polymer in the devolatilization tank is in a range from 20 minutes to 60 minutes, and the mixed gas of the carbon dioxide and the volatile component is discharged from an exhaust port.

5. The supercritical carbon dioxide assisted periodic devolatilization process according to any one of claims 1~4, further comprising an entrainment agent, mixed with the carbon dioxide gas and entering the devolatilization tank together;
wherein the entrainment agent is a polar solvent, and the ratio of the carbon dioxide gas to the entrainment agent is 4-8: 1; and
the entrainment agent is at least one of water vapor, acetone, ethyl ether, dichloromethane, and methyl tert-butyl ether.

6. The supercritical carbon dioxide assisted periodic devolatilization process according to any one of claims 1~4, comprising:
setting temperature inside the devolatilization tank to be in a range from 30°C to 60°C, injecting a mixed gas of the carbon dioxide and an entrainment agent into the devolatilization tank from a bottom of the devolatilization tank, the pressure inside the devolatilization tank being increased, and continuing to inject the mixed gas of the carbon dioxide and the entrainment agent until the pressure inside the devolatilization tank increased to a supercritical pressure value P₀ of the carbon dioxide being 7.38 MPa, wherein the carbon dioxide is in the supercritical state, and the interior of the devolatilization tank is in a supercritical carbon dioxide atmosphere state;
injecting the polymer to be devolatilized into a top of the devolatilization tank, and forming a falling film through a falling film element, wherein the supercritical carbon dioxide is in full contact with the polymer and enters the polymer, the volatile component is dissolved in the supercritical carbon dioxide, and bubbles are formed on a surface of the falling film;
turning on a valve of an exhaust port in response to the pressure inside the devolatilization tank reaching a set pressure value P₁ in the range from 8 MPa to 12 MPa, wherein the pressure inside the devolatilization tank begins to decrease, causing the bubbles on the falling film surface to be broken, a vacuum pump performs vacuuming via the exhaust port, a mixed gas of the carbon dioxide, an entrainment agent, and/or the volatile component inside the devolatilization tank is discharged via the exhaust port, and the pressure inside the devolatilization tank is decreased;
the vacuum pump stopping working in response to the pressure inside the devolatilization tank being decreased to the P₂ in the range from 0.5 KPa to 1 KPa, turning off the valve, and the pressure cycle period being completed; and
the pressure inside the devolatilization tank being increased again to the P₀ with concentration of the mixed gas of the carbon dioxide and the entrainment agent in the devolatilization tank increasing, wherein the carbon dioxide enters the supercritical state, the devolatilization tank is again in a supercritical carbon dioxide atmosphere state, the supercritical carbon dioxide is in contact with the falling film again and the bubbles are formed, the pressure is decreased again in response to the pressure reaching the set value P₁, and 3~5 pressure cycle periods are thus repeated.

7. The supercritical carbon dioxide assisted periodic devolatilization process according to claim 6, wherein the polymer is a thermosensitive polymer and/or a high-viscosity polymer.

8. A supercritical carbon dioxide assisted periodic devolatilization device according to any one of claims 1~7, **characterized by** comprising a devolatilization tank, a pressure sensor, and a vacuum pump;
wherein an exhaust port is defined on a top of the devolatilization tank and is connected to the vacuum pump;
the pressure sensor is connected to the devolatilization tank and the vacuum pump, respectively;
a material port is defined on the top of the devolatilization tank, a discharge opening and a gas inlet are defined on a bottom of the devolatilization tank respectively, a polymer to be devolatilized is injected into the devolatilization tank via the material port, a devolatilized polymer is discharged from the devolatilization tank via the discharge opening, and the carbon dioxide gas enters the devolatilization tank via the gas inlet;
the devolatilization tank is arranged with a porous distributor and a falling film element, and the falling film element is located right below the porous distributor;
the material port extends into the devolatilization tank and is connected to the porous distributor, the polymer flows into the porous distributor via the material port and is evenly distributed downward into the falling film element to form a ring-shaped falling film; and
the gas inlet extends into the devolatilization tank and forms a ring-shaped output port, and the carbon dioxide spreads upwards into the devolatilization tank via the output port and is in full contact with the falling film flowing downwards.

9. The supercritical carbon dioxide assisted periodic devolatilization device according to claim 8, wherein the gas inlet is connected to a vaporizer, a vaporized stripping agent is mixed with the carbon dioxide, and a mixture of the vaporized stripping agent and the carbon dioxide is injected into the devolatilization tank via the gas inlet.

10. The supercritical carbon dioxide assisted periodic devolatilization device according to claim 8, wherein a melt pump is arranged on the discharge opening, and the devolatilized polymer is extruded from the discharge opening into a collection device through the melt pump.
